# EUROPÄISCHE PATENTSCHRIFT

(11) **EP 0 742 457 B1**
(45) Veröffentlichungstag und Bekanntmachung des Hinweises auf die Patenterteilung: **27.05.1998**
(21) Anmeldenummer: 96102551.7
(22) Anmeldetag: 21.02.1996
(51) Int. Cl.: G02B 6/44, B65H 75/26

(54) **Wickelkörper**
Bobbin
Bobine

(30) Priorität: 09.05.1995 DE 19516899
(43) Veröffentlichungstag der Anmeldung: 13.11.1996
(73) Patentinhaber: Daimler-Benz Aerospace Aktiengesellschaft, 81663 München (DE)
(72) Erfinder: Albert, Elmar, Dr., D-73272 Neidlingen (DE); Roder, Kuno, D-85614 Eglharting (DE)

(56) Entgegenhaltungen:
- EP-A- 0 459 261
- EP-A- 0 616 237
- WO-A-90/05929

## Beschreibung

Die Erfindung bezieht sich auf einen Wickelkörper nach dem Oberbegriff des Patentanspruchs 1.

Ein wichtiges Anwendungsgebiet von Wickelkörpern dieser Art besteht darin, daß sie, bewickelt mit einem Lichtwellenleiter von bis zu 100 km Länge oder mehr, an Bord eines Flugkörpers oder eines Land- oder Wasserfahrzeugs mitgeführt werden und der Lichtwellenleiter während des Flugs bzw. während der Fahrt entgegen der Fahrtrichtung von dem fest am Fahrzeug montierten Wickelkörper in Axialrichtung desselben abgespult wird, um so auf dem Wege über den Lichtwellenleiter zwischen dem sich bewegenden Fahrzeug und einer stationären Empfangsstelle einen kontinuierlichen Datenaustausch hoher Übertragungsdichte zu ermöglichen. Beim Bewickeln des Wickelträgers wird der Lichtwellenleiter mit einer Klebstoff- oder Lackschicht versehen, die ein flüchtiges Lösungsmittel enthält und nach dem Austrocknen eine stoffschlüssige Wickelbindung zwischen den einzelnen Windungen der Bewicklung ergibt. Zum einen erleichtert eine solche Klebe- oder Haftschicht ganz wesentlich die Herstellung der Bewicklung und verleiht dieser die notwendige Festigkeit, um bei Vibrationen oder sonstigen mechanischen oder thermischen Belastungen nicht derart zerstört zu werden, daß beim späteren schnellen Abziehen des Lichtwellenleiters ein Funktionsausfall entsteht, also sich etwa die Bewicklung in einzelne Wickellagen auflöst. Daher wird eine relativ hohe Klebekraft angestrebt. Andererseits dürfen die Reibung des Lichtwellenleiters und die beim Abspulen wirksame Zugspannung nicht zu groß werden, so daß die Klebekraft in bestimmten Grenzen gehalten werden muß. Durch ungleichmäßige, sich sprunghaft ändernde Klebekräfte wird das Ablaufverhalten des Lichtwellenleiters stark beeinflußt, und insbesondere am Ablösepunkt von der Bewicklung kann es dann zu Mikrobiegungen des Lichtwellenleiters kommen, die die Signalübertragung bis hin zu einem vollständigen Systemausfall stören können. Zur Erzielung einer definierten Klebekraft ist zusätzlich zu der Verwendung eines geeigneten Klebers eine gleichmäßige Austrocknung der gesamten Bewicklung erforderlich.

Bei den z.B. aus der EP-A-0 459 261 bekannten Wickelkörpern der eingangs genannten Art trocknet jedoch die Wickelbindung an den luftseitigen Außenflächen der Bewicklung sehr rasch ab, so daß sich dort eine Kleber- oder Lackhaut bildet, die ein weiteres Abdiffundieren des Lösungsmittels aus dem Inneren der Bewicklung und damit ein Austrocknen der Wickelbindung an den tieferen Wickellagen verhindert. Die Folge ist, daß die Bewicklung auch noch nach längeren Lagerzeiten eine ungleichförmige Wickelbindung ohne definierte Klebekräfte besitzt und die Gefahr besteht, daß die in der Bewicklung verbliebenen Lösungsmittelrückstände in den Lichtwellenleiter eindringen und dort die Grunddämpfung des Lichtwellenleiters erhöhen oder gar Sollbruchstellen entstehen lassen, die dann beim schnellen Abspulen des Lichtwellenleiters zur Unterbrechung der Signalübertragungsstrecke und damit zu einem totalen Systemausfall führen.

Demgegenüber ist es Aufgabe der Erfindung, den Wickelkörper der eingangs genannten Art so zu verbessern, daß die Lösungsmittelrückstände im Inneren der Bewicklung auf baulich einfache Weise deutlich verringert werden und eine wesentlich gleichmäßiger wirksame Wickelbindung zwischen den einzelnen Windungen der Bewicklung erzielt wird.

Diese Aufgabe wird erfindungsgemäß durch den im Patentanspruch 1 gekennzeichneten Wickelkörper gelöst.

Aufgrund der besonderen Gestaltung des Wickelträgers, der nicht mehr als Diffusionssperre wirkt, sondern porös ausgebildet ist, kann das Lösungsmittel bei dem erfindungsgemäßen Wickelkörper auf dem Wege über den Wickelträger radial nach innen abdiffundieren. Wesentlich dabei ist, daß durch den beanspruchten Porositätsgrad des Wickelträgers gewährleistet wird, daß die Diffusionsgeschwindigkeit im Wickelträger annähernd gleich niedrig wie in der Bewicklung selbst gehalten wird und daher an der Grenzfläche zwischen Bewicklung und Wickelträger keine diffusionshemmende Sperrschicht in Form einer Kleber- bzw. Lackhaut entstehen kann, da die Wickelbindung an dieser Grenzfläche nicht sofort abtrocknen kann. Aus dem Inneren der Bewicklung diffundiert daher laufend Lösungsmittel nach und entweicht über den Wickelträger in die umgebende Atmosphäre, bis die Bewicklung völlig austrocknet. Hierdurch werden die Lösungsmittelrückstände im Inneren der Bewicklung abgebaut und zwischen den einzelnen Windungen eine über die gesamte Bewicklung stark vergleichmäßigte Haft- bzw. Klebebindung garantiert. Hinzu kommt, daß der Austrocknungsprozeß relativ stetig verläuft, so daß der Aufbau von Spannungen in der Bewicklung vermieden wird.

Wie bereits erwähnt, besteht ein besonders bevorzugter Anwendungsfall der Erfindung darin, daß die Bewicklung gemäß Anspruch 2 aus einem Lichtwellenleiter besteht, dessen Windungen mit einer Klebstoff- oder Lackschicht als Wickelbindung versehen sind. In diesem Fall ist der Wickelkörper gemäß Anspruch 3 vorzugsweise drehfest an Bord eines Fahrzeugs angeordnet und der Lichtwellenleiter wird während der Fahrt bzw. während des Flugs in Axialrichtung des Wickelkörpers abgezogen.

Damit sich die Lösungsmittelkonzentration in der Bewicklung möglichst rasch abbaut, enthält die Wickelbindung gemäß Anspruch 4 vorzugsweise ein leichtflüchtiges Lösungsmittel, jedoch lassen sich gewünschtenfalls auch Wickelbindungen mit einem anderen Lösungsmittel, etwa - wie gemäß Anspruch 5 bevorzugt - solche auf Wasserbasis verwenden. In jedem Fall ist die Porosität des Wickelträgers dem Lösungsmittel anzupassen. Sie liegt gemäß Anspruch 6 vorzugsweise zwischen etwa 70 und 97 %, wobei ein leichtflüchtiges Lösungsmittel eine geringere Porosität als eine Wickelbindung auf Wasserbasis verlangt.

Als besonders bevorzugte Ausgangsmaterialien für den Wickelträger kommen gemäß Anspruch 7 Metalloxide, Sintermetalle oder keramische Werkstoffe in Betracht. Um die Diffusionswege im Wickelträger klein zu halten, also nicht nur aus Gewichtsgründen, ist der Wickelträger gemäß Anspruch 8 zweckmäßigerweise als im Wandbereich poröser Hohlzylinder ausgebildet.

Die Erfindung wird nunmehr anhand eines Ausführungsbeispiels in Verbindung mit den Zeichnungen näher erläutert. Es zeigen in stark schematisierter Darstellung:
- **Fig. 1**: eine teilweise geschnittene Ansicht eines Wickelkörpers mit einer aus einem Lichtwellenleiter bestehenden Bewicklung;
- **Fig. 2**: eine vergrößerte Teildarstellung des Wickelkörpers gemäß Fig. 1 im Grenzflächenbereich zwischen Bewicklung und Wickelträger, und
- **Fig. 3**: den Verlauf der Lösungsmittelkonzentration zu Beginn des Trocknungsvorgangs (a), bei herkömmlichen Wickelkörpern nach relativ langer Trocknungszeit (b) und bei dem erfindungsgemäßen Wickelkörper während des Trocknens (c).

Der in den Fig. gezeigte Wickelkörper 2 enthält als Hauptbestandteile einen hohlzylindrischen Wickelträger 4 und eine auf diesen aufgebrachte Bewicklung 6, bestehend aus einem Lichtwellenleiter 8, mit dem der Wickelträger 4 in dicht neben- und übereinanderliegenden Windungen endlos bewickelt ist. Die Dicke des Lichtwellenleiters 8 ist der Deutlichkeit halber stark übertrieben dargestellt; tatsächlich enthält die Bewicklung 6 eine vielfach größere Anzahl von Wickellagen und nebeneinanderliegenden Einzelwindungen.

Während des Wickelvorgangs wird der Lichtwellenleiter 8 mit einer lösungsmittelhaltigen Wickelbindung 10 in Form einer Klebstoff- oder Lackschicht versehen, mit der der Lichtwellenleiter 8 entweder vor der Wickelstation, z.B. in einem nicht gezeigten Tauchbad, überzogen wird oder die jeweils nach Fertigstellung einer Wickellage auf diese aufgebracht, etwa aufgepinselt wird. Im ausgetrockneten Zustand verleiht die Wickelbindung 10 der Bewicklung 6 die erforderliche Festigkeit, um bei Vibrationen oder anderen mechanischen oder thermischen Stoßbelastungen nicht zerstört zu werden, aber auch beim späteren schnellen Abwickeln des Lichtwellenleiters 8 keine Funktionsstörung zu verursachen.

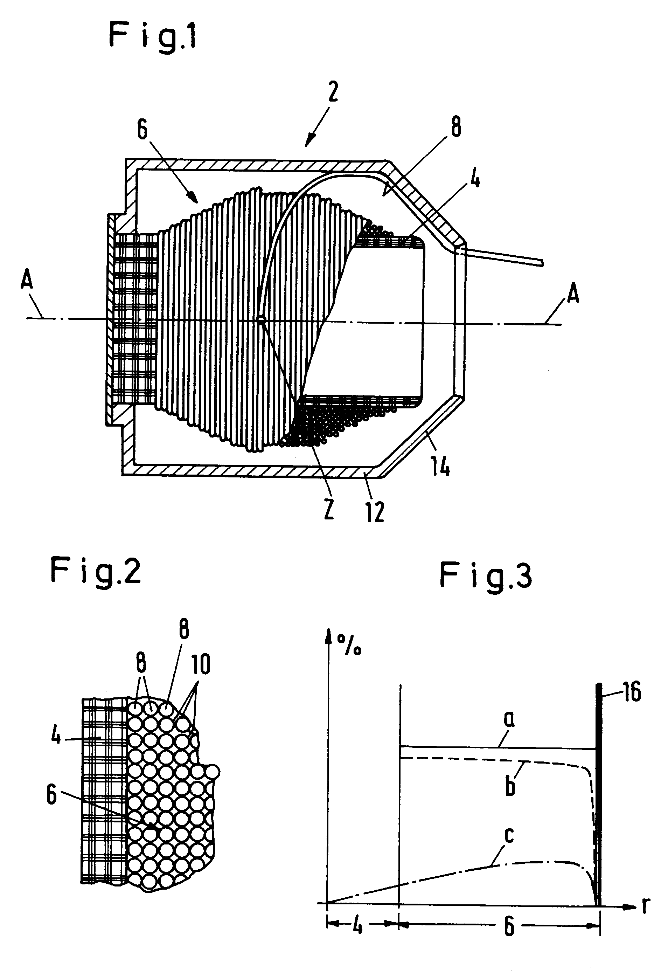

Fig. 1 zeigt den Wickelkörper 2 während des Abspulvorgangs an Bord eines (nicht gezeigten) Luft-, Boden- oder Wasserfahrzeugs, an dem der Wickelkörper 2 feststehend montiert und in eine Außenhülle 12 mit einem sich entgegen der Flug- bzw. Fahrtrichtung nach hinten öffnenden Ablauftrichter 14 eingeschlossen ist. Der Lichtwellenleiter 8, der zwischen dem sich bewegenden Fahrzeug und einer (ebenfalls nicht gezeigten) Empfangsstation, an die das freie Lichtwellenleiterende angeschlossen ist, einen kontinuierlichen Datenaustausch ermöglicht, vollzieht während des Abspulvorgangs eine Rotationsbewegung um die Wickelkörperachse A, nämlich einmal je abgezogener Spulenwindung, so daß er unter der daraus resultierenden Fliehkraftwirkung im wesentlichen tangential zum momentanen Abzugspunkt Z von der Bewicklung 6 radial nach außen in Richtung der Hülle 12 aufsteigt, von wo er nach hinten über den Ablauftrichter 14 abläuft. Um einen störungsfreien Abspulvorgang sicherzustellen, ist eine definierte, von sprunghaften Klebe- oder Haftkraftänderungen freie Wickelbindung 10 zwischen den Windungen der Bewicklung 6 erforderlich.

Um dies zu erreichen, muß das Lösungsmittel nahezu vollständig aus der Bewicklung 6 ausdiffundiert sein. Am Ende des Wickelvorgangs besitzt die Wickelbindung 10 noch eine vergleichsweise hohe und über die gesamte radiale Wickeldicke der Bewicklung 6 im wesentlichen konstante Lösungsmittelkonzentration (a gemäß Fig. 3). Infolge der unbehinderten Lösungsmittelverdunstung an den luftseitigen Außenflächen der Bewicklung 6 bildet sich dort sehr rasch eine Klebstoff- oder Lackhaut 16, die als diffusionshemmende oder -unterbrechende Sperrschicht wirkt und einen weiteren Lösungsmitteltransport aus dem Inneren der Bewicklung 6 an die umgebende Atmosphäre verhindert. Auch nach längeren Trocknungszeiten besitzen daher herkömmliche Wickelkörper nach wie vor hohe Lösungsmittelkonzentrationen an den weiter innen liegenden Spulenwindungen und einen sehr ungleichförmigen, sich zur Außenhaut 16 hin sprunghaft ändernden Trocknungszustand (siehe Konzentrationsverlauf b gemäß Fig. 3).

Durch die nachfolgend beschriebene Gestaltung des Wickelträgers 4 wird ein nahezu vollständiges Austrocknen der Wickelbindung 10 über die gesamte Bewicklung 6 selbst bei einer sehr großen radialen Bewicklungsdicke gewährleistet. Zu diesem Zweck ist der Wickelträger 4 aus einem offenporig porösen Material, etwa einem Metalloxid, einem Sintermetall oder einem keramischen Werkstoff hergestellt und besitzt einen Porositätsgrad zwischen etwa 70 und 97 %, der in Abhängigkeit von dem Lösungsmittel so gewählt wird, daß der Wickelträger 4 bezüglich des Lösungsmittels annähernd den gleichen oder einen allenfalls geringfügig kleineren Diffusionskoeffizienten wie die Bewicklung 6 aufweist. Infolgedessen diffundiert das Lösungsmittel, ausgehend vom Anfangszustand a gemäß Fig. 3, aufgrund des Konzentrationsunterschiedes des Lösungsmittels an der Grenzfläche zwischen Wickelträger 4 und Bewicklung 6 in die Poren des Wickelträgers 4, und das hindurchdiffundierte Lösungsmittel entweicht an der Innenfläche des Wickelträgers 4 in die umgebende Atmosphäre. Weil der Diffusionskoeffizient des Wickelträgers 4 an den der Bewicklung 6 angepaßt ist, entsteht an der wickelträgerseitigen Grenzfläche der Bewicklung 6 keine diffusionshemmende bzw. -unterbrechende Sperrschicht in Form einer Kleber- bzw. Lackhaut, da an dieser Grenzfläche die Wickelbindung 10 nicht sofort abtrocknen kann. Aus dem Inneren der Bewicklung 6 diffundiert laufend Lösungsmittel nach. Auf diese Weise nimmt die Lösungsmittelkonzentration über die gesamte Radialbreite der Bewicklung 6 langsam ab, bis die Wickelbindung 10 völlig ausgetrocknet ist. Fig. 3, c zeigt den Lösungsmittelkonzentrationsverlauf in der Bewicklung 6 und im Wickelträger 4 während des Trocknens. Nach Beendigung des Trocknungsvorgangs wird somit eine weitgehend lösungsmittelrückstandsfreie, gleichförmige Wickelbindung 10 der Bewicklung 6 erhalten.

Für die Wickelbindung 10 können sowohl Kleber oder Lacke mit einem leichtflüchtigen Lösungsmittel, etwa Toluol, in Verbindung mit einem relativ niedrigen Porositätsgrad des Wickelträgers 4 verwendet werden als auch solche auf Wasserbasis, die einen entsprechend höheren Porositätsgrad des Wickelträgers 4 verlangen.

## Patentansprüche

1. Wickelkörper mit einem Wickelträger und einer auf diesen aufgebrachten Bewicklung, deren Windungen mit einer stoffschlüssigen, ein flüchtiges Lösungsmittel enthaltenden und im ausgetrockneten Zustand die Windungen gegenseitig fixierenden Wickelbindung versehen sind,
**dadurch gekennzeichnet, daß**
der Wickelträger (4) offenporig porös ausgebildet ist und bezüglich des Lösungsmittels im wesentlichen den gleichen oder einen geringfügig kleineren Diffusionskoeffizienten wie die Bewicklung (6) aufweist.

2. Wickelkörper nach Anspruch 1,
**dadurch gekennzeichnet, daß**
die Bewicklung (6) aus einem mit einer Klebstoff- oder Lackschicht als Wickelbindung (10) versehenen Lichtwellenleiter (8) besteht.

3. Wickelkörper nach Anspruch 2,
**dadurch gekennzeichnet, daß**
der Wickelkörper (2) drehfest an Bord eines Fahrzeugs angeordnet und der Lichtwellenleiter (8) während der Fahrt bzw. während des Flugs in Axialrichtung des Wickelkörpers abziehbar ist.

4. Wickelkörper nach einem der vorhergehenden Ansprüche,
**dadurch gekennzeichnet, daß**
die Wickelbindung (10) ein leichtflüchtiges Lösungsmittel, z.B. Toluol enthält.

5. Wickelköper nach einem der Ansprüche 1 bis 3,
**dadurch gekennzeichnet, daß**
als Lösungsmittel für die Wickelbindung (10) Wasser vorgesehen ist.

6. Wickelkörper nach einem der vorhergehenden Ansprüche,
**dadurch gekennzeichnet, daß**
die Porosität des Wickelträgers (4) zwischen etwa 70 und 97 % liegt.

7. Wickelkörper nach einem der vorhergehenden Ansprüche,
**dadurch gekennzeichnet, daß**
der Wickelträger (4) aus Metalloxid, Sintermetall oder einem keramischen Werkstoff hergestellt ist.

8. Wickelkörper nach einem der vorhergehenden Ansprüche,
**dadurch gekennzeichnet, daß**
der Wickelträger (4) als hohlzylindrischer, im Wandbereich poröser Wickelkern ausgebildet ist.

## Claims

1. Winding body comprising a winding carrier and a thereto applied winding the windings of which are provided with a material bond which contains a volatile solvent and which in its dried state fixes the windings to each other, **characterised in that** the winding carrier (4) is of open-pore porous design and, as regards the solvent, has essentially the same or a slightly smaller diffusion coefficient than the winding (6).

2. Winding body according to Claim 1, **characterised in that** the winding (6) is composed of an optical fibre (8) which is provided with an adhesive or lacquer layer as winding bond (10).

3. Winding body according to Claim 2, **characterised in that** the winding body (2) is non-rotationally arranged onboard a vehicle, and the optical fibre (8) is pulled out in the axial direction of the winding body during a trip or flight.

4. Winding body according to one of the above claims, **characterised in that** the winding bond (10) contains a light volatile solvent, for example Toluol.

5. Winding body according to one of Claims 1 to 3, **characterised in that** water is provided as a solvent for the winding bond (10).

6. Winding body according to one of the above claims, **characterised in that** the porosity of the winding carrier (4) lies between approximately 70 and 97%.

7. Winding body according to one of the above claims, **characterised in that** the winding carrier (4) is made of metal oxide, sintered metal or a ceramic material.

8. Winding body according to one of the above claims, **characterised in that** the winding carrier (4) is designed as a hollow cylindrical winding core which is porous in the wall area.

## Revendications

1. Ensemble bobine comportant un support de bobine et un bobinage formé sur celui-ci, dont les spires sont pourvues d'une matière de liaison contenant un solvant volatile, qui à l'état sec fixe les spires les unes par rapport aux autres, caractérisé par le fait que le support de bobine (4) est poreux avec des pores ouverts et présente vis-à-vis du solvant le même indice de diffusion ou un indice de diffusion légèrement plus faible que le bobinage (6).

2. Ensemble bobine selon la revendication 1, caractérisé par le fait que le bobinage (6) est formé d'une fibre optique (8) pourvue d'une couche d'adhésif ou de vernis en tant que matière de liaison (10).

3. Ensemble bobine selon la revendication 2, caractérisé par le fait que l'ensemble bobine (2) est solidaire en rotation d'un véhicule et que la fibre optique (8) est dévidée dans la direction axiale de l'ensemble bobine pendant le déplacement du véhicule ou pendant le vol.

4. Ensemble bobine selon une des revendications précédentes. caractérisé par le fait que la matière de liaison (10) contient un solvant fortement volatile, par exemple du toluène.

5. Ensemble bobine selon une des revendications 1 à 3 caractérisé par le fait qu'il est prévu de l'eau comme solvant pour la matière de liaison (10).

6. Ensemble bobine selon une des revendications précédentes. caractérisé par le fait que la porosité du support de bobine (4) est comprise entre environ 70 et environ 97 %.

7. Ensemble bobine selon une des revendications précédentes. caractérisé par le fait que le support de bobine (4) est réalisé en oxyde métallique, en métal fritté ou en un matériau céramique.

8. Ensemble bobine selon une des revendications précédentes, caractérisé par le fait que le support de bobine (4) se présente sous la forme d'un noyau de bobine cylindrique creux poreux dans la région de la paroi.
